# EUROPEAN PATENT APPLICATION

(11) **EP 4 672 400 A1**
(43) Date of publication of application: **31.12.2025**
(21) Application number: 25183157.4
(22) Date of filing: 17.06.2025
(51) Int. Cl.: H01M 10/04, H01M 50/107, H01M 50/533, H01M 50/559

(54) **BATTERY ASSEMBLY AND BATTERY CELL INCLUDING THE SAME**

(30) Priority: 25.06.2024 KR 20240082857
(71) Applicant: SK On Co., Ltd., Seoul 03161 (KR)
(72) Inventor: SON, Hye Been, 34124 Daejeon (KR); SHIN, Jae Sik, 34124 Daejeon (KR); OH, Won Je, 34124 Daejeon (KR)
(74) Representative: Stolmár & Partner Patentanwälte PartG mbB

(57) **Abstract**

The present disclosure relates to an electrode assembly comprising: a first electrode; a second electrode having an electrical polarity different from that of the first electrode; and a separator interposed between the first electrode and the second electrode, wherein the first electrode and the second electrode have a flag which is bent outward, and relates to a battery cell including the same.

## Description

### BACKGROUND OF THE INVENTION

### 1. Field

The present disclosure relates to an electrode assembly and a battery cell including the same. More specifically, the present invention relates to an electrode assembly having improved thermal stability and a battery cell including the same.

### 2. Description of the Related Art

Secondary batteries can generate heat during charging and discharging. Therefore, in order to effectively dissipate the heat generated in the secondary battery, there is a demand for a method of adjusting the direction of movement of the heat.

In particular, a typical secondary battery has a large resistance at the tab portion (unsupported portion or flag portion) of the electrode assembly, so that heat can be generated relatively more than other portions. Therefore, it is necessary to control the movement direction of heat in the tab portion of the electrode assembly.

According to an aspect of the present disclosure, improving the thermal stability of a battery cell is a solution.

According to another aspect of the present disclosure, the problem is to extend the life of the battery cell.

According to another aspect of the present disclosure, the problem is to induce the heat of the battery cell to move outward rather than inward.

Meanwhile, the electrode assembly according to the present disclosure and the battery cell including the electrode assembly can be widely applied to electric vehicles, battery charging stations, energy storage systems (ESS), and other green technology fields such as photovoltaics and wind power using battery cells. In addition, the electrode assembly according to the present disclosure and the battery cell including the same can be used for eco-friendly mobility and the like including electric vehicles and hybrid vehicles for preventing climate change by suppressing air pollution and greenhouse fluid emission.

### SUMMARY OF THE INVENTION

An electrode assembly according to an embodiment of the present disclosure may comprise: a first electrode including a first electrode plate including a first coating region on which one of a positive active material and a negative active material is coated and a first flag portion formed by extending a part of the first electrode plate along one edge of the first electrode plate; a second electrode including a second electrode plate including a second coating region on which other of the positive electrode active material and the negative electrode active material is coated and a second flag portion formed by extending a part of the second electrode plate along one edge of the second electrode plate in a direction opposite to the direction in which the first flag portion extends; and a separator interposed between the first electrode and the second electrode; wherein the first electrode, the second electrode, and the separator are wound around an imaginary winding axis, and the first flag portion is bent in a direction away from the winding axis.

In an embodiment, the first flag portion may be arranged to be spaced apart from one end on the outermost side of the first electrode by a preset starting distance along the winding direction, which is a direction toward the winding axis along the first electrode.

In an embodiment, the first flag portion may include a plurality of first flag groups each including a plurality of first flags, and the plurality of first flag groups are arranged to be spaced apart from each other by a preset spacing distance.

In an embodiment, the plurality of first flags in one of the plurality of first flag groups may be arranged to be spaced apart from each other by a preset spacing gap smaller than the spacing distance.

In an embodiment, the length of a flag in one first flag group among the plurality of first flag groups along the extending direction of the first flag portion may be less than or equal to the length of a flag in another first flag group among the plurality of first flag groups that is closer to the winding axis than the one first flag group along the winding direction.

In an embodiment, the number of flags in one first flag group among the plurality of first flag groups may be less than or equal to the number of flags in another first flag group among the plurality of first flag groups that is closer to the winding axis than the one first flag group along the winding direction.

In an embodiment, the width of a flag in one first flag group among the plurality of first flag groups may be larger than or equal to the width of a flag in another first flag group among the plurality of first flag groups that is closer to the winding axis than the one first flag group along the winding direction.

In an embodiment, the first flag portion includes a plurality of first flags, and at least a part of one first flag among the plurality of first flags may overlap with at least a part of other first flag that is closer to the winding axis than the one first flag along the radial direction.

In an embodiment, the second flag portion may be bent in a direction away from the winding axis.

In an embodiment, the first flag portion may include a plurality of first flags, and each of the plurality of first flags may extend along a direction inclined with the winding axis.

In an embodiment, a battery cell may comprise: an electrode assembly formed by winding a first electrode, a second electrode, and a separator interposed between the first electrode and the second electrode; a case accommodating the electrode assembly; and a terminal portion protruding from the case; wherein the first electrode includes a first electrode plate including a first coating region on which one of a positive electrode active material and a negative electrode active material is coated, and a first flag portion formed by extending a part of the first electrode plate along one edge of the first electrode plate and being bent in a direction away from the central region of the electrode assembly and connected electrically to the terminal portion.

In an embodiment, the electrode assembly may be wound around the central region.

In an embodiment, the first flag portion may be arranged to be spaced apart from one end on the outermost side of the first electrode by a preset starting distance along the winding direction, which is a direction toward the central region along the first electrode.

In an embodiment, the first flag portion may include a plurality of first flag groups each including a plurality of first flags, and the plurality of first flag groups are arranged to be spaced apart from each other by a preset spacing distance.

In an embodiment, the plurality of first flags in one of the plurality of first flag groups may be arranged to be spaced apart from each other by a preset spacing gap smaller than the spacing distance.

In an embodiment, the length of a flag in one first flag group among the plurality of first flag groups may be less than or equal to the length of a flag in another first flag group among the plurality of first flag groups that is closer to the central region than the one first flag group along the winding direction.

In an embodiment, the number of flags in one first flag group among the plurality of first flag groups may be less than or equal to the number of flags in another first flag group among the plurality of first flag groups that is closer to the central region than the one first flag group along the winding direction.

In an embodiment, the width of a flag in one first flag group among the plurality of first flag groups may be larger than or equal to the width of a flag in another first flag group among the plurality of first flag groups that is closer to the central region than the one first flag group along the winding direction.

In an embodiment, the first flag portion may include a plurality of first flags, and at least a part of one first flag among the plurality of first flags may overlap with at least a part of other first flag that is closer to the central region than the one first flag along the radial direction.

In an embodiment, the second electrode may include a second electrode plate including a second coating region on which the other of a positive electrode active material and a negative electrode active material is coated, and a second flag portion formed by extending a part of the second electrode plate along one edge of the second electrode plate in a direction opposite to the direction in which the first flag portion extends and is bent in a direction away from the central region of the electrode assembly.

According to an embodiment of the present disclosure, thermal stability of a battery cell may be improved.

According to another embodiment of the present disclosure, it is possible to extend the life of the battery cell.

According to another embodiment of the present disclosure, it is possible to induce the heat of the battery cell to move outward rather than inward.

### BRIEF DESCRIPTION OF THE DRAWINGS

FIG. 1 schematically illustrates an example of a battery cell according to the present disclosure.
FIG. 2 schematically illustrates an example of an electrode assembly according to the present disclosure.
FIG. 3 schematically illustrates a portion of a cross section of a battery cell according to the present disclosure.
FIG. 4 schematically illustrates a portion of a cross-section of an electrode assembly according to the present disclosure.
FIG. 5 schematically illustrates an example viewed from above of an electrode assembly according to the present disclosure.
FIG. 6 schematically illustrates an example of an electrode assembly according to the present disclosure.
FIG. 7 schematically illustrates another example of an electrode assembly according to the present disclosure.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Throughout the specification, when it is mentioned that a part is "connected" to another part, it includes not only the case where they are "directly connected," but also the case where they are "electrically connected" with another element in between.

Throughout the specification, when it is mentioned that an element is "on" another element, this includes not only the case where the element is in contact with the other element, but also the case where there is another element between the two elements.

For example, an expression indicating relative or absolute arrangement such as "in a direction," "along a direction," "in parallel," "vertically," "centrally," "concentrically," or "coaxially" not only strictly indicates such arrangement, but also indicates a state of relative displacement with tolerance or an angle or distance to the extent that the same function is obtained.

Throughout the specification, when it is mentioned that a part "includes" or "comprises" a component, this does not mean that it excludes other components, but rather that it may include other components, unless otherwise specifically stated. The terms such as "about" and "substantially", which indicate degrees, as used throughout the specification, are used in a meaning that is at or near a numerical value when manufacturing and material tolerances inherent in the meanings stated are given, and are used to prevent unscrupulous infringers from unfairly exploiting the disclosure, which states precise or absolute numbers to aid understanding of the present disclosure. The terms "step of doing ~" or "step of ~" as used throughout the specification do not mean "step for ~".

Hereinafter, with reference to the accompanying drawings and the description below, preferred embodiments of the present disclosure are described in detail. However, the present disclosure is not limited to the embodiments described here, but may be embodied in other forms. Throughout the specification, the same reference numerals represent the same components.

In addition, in the present disclosure, a battery, a secondary battery, or a cell is used as a term having the same meaning as a battery cell.

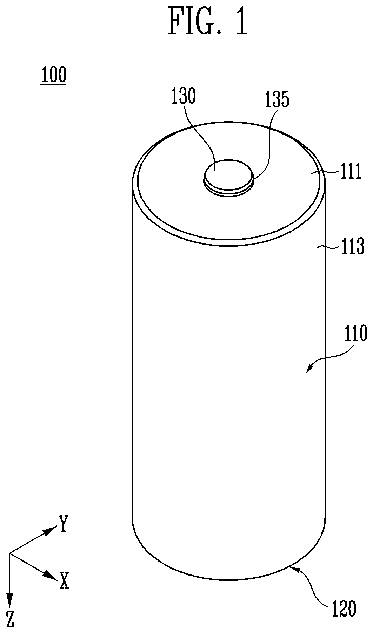

FIG. 1 schematically illustrates an example of a battery cell according to the present disclosure.

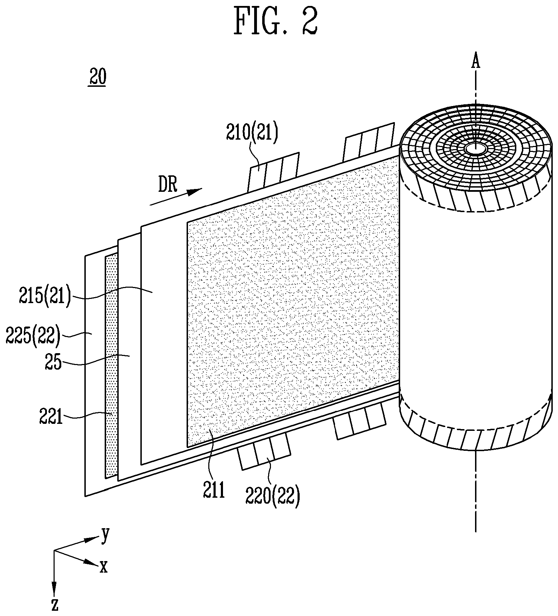

Referring to FIG. 1, a battery cell 100 according to the present disclosure may include a case 110 or can accommodating an electrode assembly 20 (see FIG. 2) therein, and a terminal portion 130 that is electrically connected to the electrode assembly 20 and protrudes to the outside of the case 110.

The battery cell 100 according to the present disclosure may be a secondary battery capable of being charged and discharged multiple times. For example, the secondary battery may be one of, but not limited to, a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, or an all-solid-state battery, and may be transformed into various types of secondary batteries.

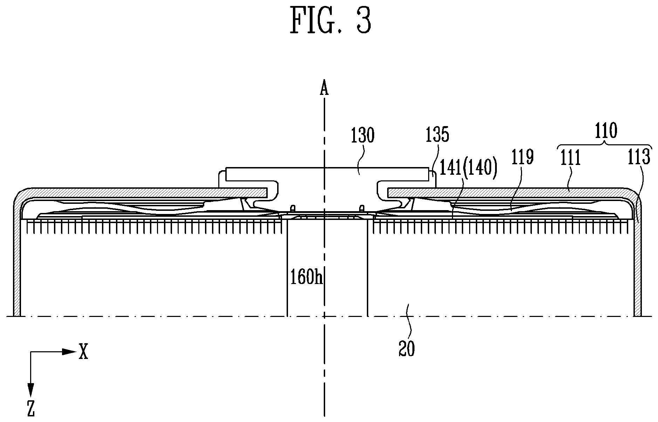

The case 110 may accommodate the electrode assembly 20. In addition, the case 110 may accommodate a current collector 140 (see FIG. 3) electrically connected to the electrode assembly 20.

The case 110 may include a body 113 including an opening (not shown) with one end open and a cap plate 120 coupled to the body 113 to cover the opening.

In addition, the battery cell 100 according to the present disclosure may further include a current collector 140 (see FIG. 3) provided inside the case 110 and electrically connected to the electrode assembly 20.

For example, the case 110 may have the shape of a container that is partially open. In one embodiment, the case 110 may comprise a metal such as iron or aluminum or an alloy including iron or aluminum, a plastic, a ceramic, or a material such as carbon.

In one embodiment, the case 110 may include a planar portion 111 facing the opening. That is, the planar portion 111 may face the cap plate 120. The planar portion 111 may form the other end of both ends of the body 113. The opening may be formed at one of both ends of the body 113, while the other end of the body may be blocked by the planar portion 111.

For example, the case 110 may be molded into a cup shape by pressing a cylindrical disk at a constant pressure. This is called Deep Drawing.

FIG. 1 shows an example in which the case 110 is turned upside down, the opening is down, and the planar portion 111 is up. That is, the planar portion 111 may extend from an upper end or a lower end of the body 113. Here, the upper end and the lower end may be one of ends in the height direction (e.g., the Z-axis direction).

At least a part of the planar portion 111 may be formed as a flat surface with no height change in the horizontal direction (e.g., the X-axis direction, the Y-axis direction). The shape of the planar portion 111 with respect to the XY plane may be circular, but is not limited thereto, and may be deformed into an ellipse, a triangle, a rectangle, a polygon, or the like.

The outer circumferential surface of the body 113 may extend in a height direction (e.g., the Z-axis direction) around the planar portion 111. In one embodiment, the body 113 may be integrally formed. That is, the planar portion 111 and the outer peripheral surface of the body 113 may be integrally formed.

In an embodiment, in order to couple the cap plate 120 and the body 113, the body 113 may include a beading portion (not shown) formed by recessing a part of the outer circumferential surface of the body 113 inward along the circumference of the outer circumferential surfaces of the body 113.

For example, the electrode assembly 20 and the current collector 140 may be inserted into the inner space of the case 110 through the opening. Thereafter, the beading portion may be formed in a region of the body 113 adjacent to the opening portion.

The cap plate 120 may seal the case 110. In an embodiment, after the electrode assembly 20 and the current collector 140 are accommodated in the inner space of the case 110, the cap plate 120 may be coupled to the case 110. That is, the case 110 and the cap plate 120 may surround the outside of the electrode assembly 20 and the current collector 140.

In one embodiment, the cap plate 120 and the case 110 coupled to each other may be cylindrical in shape. In the present disclosure, an example in which the case 110 is cylindrical is shown, but this is only an embodiment, and the shapes of the cap plate 120 and the case 110 coupled to each other may be deformed into various shapes such as a square or a hexahedron.

In one embodiment, the cap plate 120 may be located on the opposite side of the planar portion 111. For example, when the planar portion 111 is formed on the upper end of the body 113, the cap plate 120 may be coupled to the lower end of the body 113.

The battery cell 100 may further include a terminal portion 130 having an electrical polarity of either a positive electrode or a negative electrode. The battery cell 100 may further include an insulating gasket 135 for electrically insulating the terminal portion 130 and the case 110.

In an embodiment, the terminal portion 130 may be located on a side opposite to the cap plate 120 in a height direction (e.g., Z-axis direction). The terminal portion 130 may be electrically connected to an external device. That is, a current may flow to an external device through the terminal portion 130.

In one embodiment, the terminal portion 130 may be inserted into a through hole (not shown) of the case 110. In one embodiment, the terminal portion 130 may be a rivet. In an embodiment, the through hole may be formed in the planar portion 111. For example, the through hole may be formed by penetrating the center of the planar portion 111.

In one embodiment, the insulating gasket 135 may be disposed between the case 110 and the terminal portion 130. For example, the insulating gasket 135 may be disposed between the planar portion 111 and the terminal portion 130. The insulating gasket 135 may include an electrically insulating material. Insulating material means a material with low electrical conductivity. For example, the insulating material may be any one of a polymer and a ceramic, or a combination thereof.

FIG. 2 schematically illustrates an example of an electrode assembly according to the present disclosure.

An electrode assembly 20 according to the present disclosure may include: a first electrode 21 including a first electrode plate 215 including a first coating region 211 on which one of a positive active material and a negative active material is coated, and a first flag portion 210 formed by extending a part of the first electrode plate 21 along one edge of the first electrode plates 215; a second electrode 22 including a second electrode plate 225 including a second coating region 221 on which other of the positive electrode active material and a negative electrode active material is coated and a second flag portion 220 formed by extending a part of the second electrode plate 225 along one edge of each of the second electrode plates 225 in a direction opposite to the direction in which the first flag portion 210 extends; and a separator 25 interposed between the first electrode 21 and the second electrode 22, wherein the first electrode 21, the second electrode 22, and the separator 25 are wound around an imaginary winding axis A, and the first flag portions 210 may be bent in a direction away from the winding axis A.

The electrode assembly 20 according to the present disclosure may include a first electrode 21, a second electrode 22, and a separator 25 interposed between the first electrode 21 and the second electrode 22.

The first electrode 21 may have the electrical polarity of either the positive electrode or the negative electrode, and the second electrode 22 may have the other electrical polarity. The separator 25 may be provided to electrically separate the first electrode 21 and the second electrode 22. That is, the separator 25 may electrically separate the first electrode 21 from the second electrode 22. In addition, the separator 25 may surround the outermost edge of the wound electrode assembly 20 to electrically separate the electrode assembly 20 from the case 110.

Specifically, the first electrode 21 may include a first electrode plate 215 including a first coating region 211 on which an active material of either a positive electrode active material or a negative electrode active material is coated, and a first flag portion 210 formed by extending a part of the first electrode plate 225 along an edge of the first electrode plates 215.

The second electrode 22 may include a second electrode plate 225 including a second coating region 221 on which another active material of a positive electrode active material or a negative electrode active material is coated, and a second flag portion 220 in which a portion of the second electrode plate 225 extends in a direction opposite to a direction in which the first flag portion 210 extends and is bent in a direction away from a central region 160h of the electrode assembly 20 along one edge of the second electrode plates 225.

The electrode assembly 20 may include a separator 25 stacked between the first electrode 21 and the second electrode 22. For this purpose, the separator 25 may be made of an insulating material.

The active material coated on the first electrode 21 may be referred to as a first active material, and the active material coated on second electrode 22 may be referred to a second active material. The first active material and the second active material may each have an electrically different polarity.

The first electrode 21 may be referred to as a first uncoated portion excluding the first coating region 211. That is, the first uncoated portion may include a region where the first electrode plate 215 is exposed to the outside (or a region not coated with the first active material) among the first flag portion 210 and the first electrode plates 215.

Similarly, the second electrode 22 may be referred to as a second uncoated portion excluding the second coating region 221. That is, the second uncoated portion may include a region where the second electrode plate 225 is exposed to the outside (or a region not coated with the second active material) among the second flag portion 220 and the second electrode plate225.

That is, the first uncoated portion and the second uncoated portion may refer to a region where each metal material forming the first electrode plate 215 and the second electrode plate 225 is exposed to air or an electrolyte as it is.

The reason why the first uncoated portion includes a region of the first electrode plate 215 adjacent to the first flag portion 210 is to prevent the first active material from being separated from the first electrode plate 215 when the first flag portions 210 are formed, and to facilitate folding of the first flag parts 210.

Similarly, the reason why the second uncoated portion includes a region of the second electrode plate 225 adjacent to the second flag portion 220 is to prevent the second active material from being separated from the second electrode plate 225 when the second flag portions 220 are formed, and to facilitate folding of the second flag parts 220.

The first flag portion 210 and the second flag portion 220 may protrude in different directions. This is to prevent a short circuit between the first flag portion 210 and the second flag portion 220.

When the first flag portion 210 extends toward one of both ends of the case 110 in the height direction (along the Z direction) of the case 110, the second flag portion 220 may extend in a direction opposite to the extension direction of the first flag part 210.

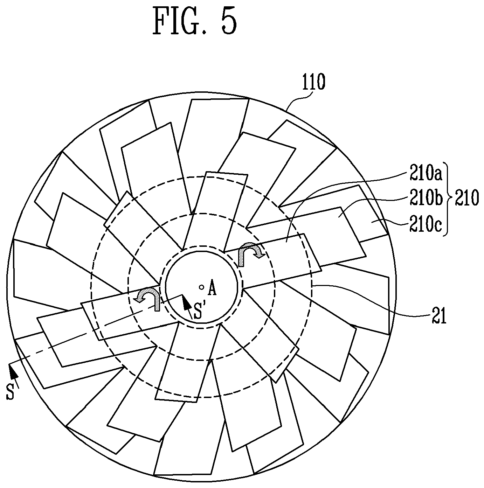

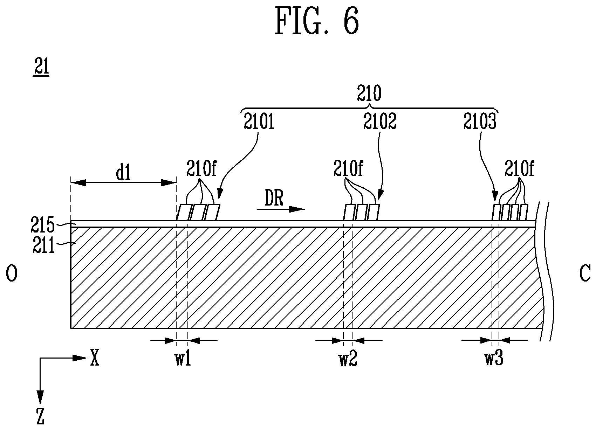

Meanwhile, the first flag portion 210 may include a plurality of first flag groups 2101, 2102, 2103 (see FIG. 6) including a plurality of first flags 210f (see FIG. 5), and the plurality of first flag group 2101, 2102, and 2103 may be arranged to be spaced apart from each other by a preset distance.

This will be described later in FIG. 6. In addition, the description of the first flag portion 210 may be applied equally to the second flag portion 220, unless otherwise specified. For example, the second flag portion 220 may include a plurality of second flag groups (not shown) each including a plurality of second flags (not shown), and the plurality of second flag group may be arranged to be spaced apart from each other by a preset distance.

FIG. 2 illustrates an example in which the first electrode 21, the second electrode 22, and the separator 25 are each formed into a single plate, stacked, and then rolled up like a scroll, but in contrast, the first electrode 21 and the second electrode 22 may be stacked (or stacked) a plurality of times sequentially, and then bent according to the shape of the case 110.

For the purpose of explanation in the present disclosure, when the electrode assembly 20 is wound in a roll shape, a direction in which the electrode assembly 20 moves from one end on the outermost side toward the winding axis A or the central region 160h (see FIG. 3) along one edge of the electrode assembly 20 will be referred to as a winding direction DR.

That is, after the first electrode 21, the second electrode 22, and the separator 25 are stacked, they may be wound in a roll shape along the winding direction.

That is, the first electrode 21 may be wound in the form of a roll along the winding direction. The same applies to the second electrode 22 and the separator 25.

The present disclosure also defines a radial direction for purposes of explanation. That is, in view of the fact that the rough shape in which the electrode assembly 20 is wound is a cylindrical shape, similarly to a cylindrical coordinate system, a direction along an imaginary extension line extending outward at a preset angle with respect to the winding axis A, which is an imaginary axis of the electrode assembly 20, is defined as a radial direction.

FIG. 3 schematically illustrates a portion of a cross section of a battery cell according to the present disclosure.

Referring to FIGS. 1 and 3, a battery cell 100 according to the present disclosure may include the current collector 140 and the electrode assembly 20 inside the case 110.

The electrode assembly 20 may be wound along an imaginary winding axis A. The winding axis A of the electrode assembly 20 may be located in a central region 160h of the electrode assembly. The central region 160h may be in the form of a hole. The central region 160h may be provided to prevent the first electrode 21 (see FIG. 2) and/or the second electrode 22 (see FIG. 3) from being damaged due to a large curvature when the electrode assembly 20 is wound.

The battery cell 100 according to the present disclosure may further include an electrolyte in the case 110. The electrolyte may be, for example, a medium that transfers ions or current between the first electrode 21 and the second electrode 22.

Referring to FIG. 3, the battery cell 100 according to the present disclosure may further include a current collector 140 electrically connecting the electrode assembly 20 and the terminal portion 130. The current collector 140 may be located inside the case 110 to electrically connect the electrode assembly 20 and the outside.

The current collector 140 may include at least one of a first current collector 141 and a second current collector (not shown).

The first current collector 141 may be disposed between the planar portion 111 and the electrode assembly 20 to electrically connect the terminal portion 130 to the electrode assembly 20.

In order to electrically insulate the terminal portion 130 and the planar portion 111, the battery cell 100 according to the present disclosure may further include an insulating gasket 135 that surrounds the periphery of the terminal portion 130, and is disposed between the terminal portion 130.

Alternatively, the second current collector (not shown) may be disposed between the cap plate 120 (see FIG. 1) and the electrode assembly 20 to electrically connect the cap plate 120 to the electrode assembly 20. That is, the first current collector 141 and the second current collector may be electrically connected to different electrodes of the electrode assembly 20.

For example, the first current collector 141 may be connected to the first electrode 21, and the second current collector may be connected to a second electrode 22. That is, the first current collector 141 may be connected to the first flag portion 210, and the second current collector may be connected to a second flag portion 220.

In an embodiment, the first current collector 141 is electrically connected to the terminal portion 130, and the second current collector may be electrically connected to the case 110 and/or the cap plate 120.

Thus, the first current collector 141 may be positioned between the electrode assembly 20 and the planar portion 111. The second current collector may be positioned between the electrode assembly 20 and the cap plate 120.

Meanwhile, for electrical connection, the current collector 140 may include a conductive material such as copper, gold, silver, aluminum, and a conductive polymer.

In addition, the battery cell 100 according to the present disclosure may include an insulating cover 119 to electrically insulate the first current collector 141 from the case 110 or the planar portion 111. The insulating cover 119 may have a disk shape including an insulating through-hole penetrating a position corresponding to the central region 160h.

The first flag portion 210 and the first current collector 141 may be joined by welding for electrical connection of the first flag portion 210 and the first current collection 141 (see FIG. 2). Likewise, the second flag portion 220 and the second current collector may be joined by welding (see FIG. 2).

That is, the first flag portion 210 may be electrically connected to the terminal portion 130 or terminal through the first current collector 141 to supply the electrical energy generated in the electrode assembly 20 to the outside or to store the electrical energy in the electrode assembly.

Similarly, the second flag portion 220 may be electrically connected to the case 110 and/or the cap plate 120 through the second current collector.

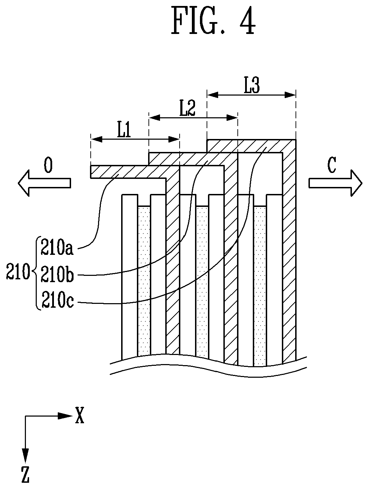

FIG. 4 schematically illustrates a portion of a cross-section of an electrode assembly according to the present disclosure. FIG. 5 schematically illustrates an example viewed from above of an electrode assembly according to the present disclosure.

More specifically, FIG. 4 shows a cross section of the electrode assembly 20 parallel to the height direction (Z direction) of the battery cell 100 or the winding axis A. In addition, FIG. 4 is shown on an exaggerated scale to emphasize that the first flag portion 210 is bent.

FIG. 2 shows the shape of the electrode assembly 20 before the first flag portion 210 and the second flag portion 220 are folded. In contrast, FIG. 4 shows a cross section after the first flag portion 210 is folded. The bent shape of the second flag portion 220 may be the same as that of the first flag portion 210.

Referring to FIG. 4, in the present disclosure, the outermost side of the electrode assembly 20 is referred to as an outer portion O, and a portion where the central region 160h or the winding axis A of the electrode assembly 30 is located is referred to as a center portion C.

Referring to FIGS. 2 and 4, an electrode assembly 20 according to the present disclosure includes a first electrode 21 including a first electrode plate 215 including a first coating region 211 on which one of a positive active material and a negative active material is coated, and a first flag portion 210 formed by extending a part of the first electrode plate 215 along one edge of the first electrode plates 215, a second electrode 22 including a second electrode plate 225 including a second coating region 221 on which other of the positive electrode active material and the negative electrode active material is coated, and a second flag portions 220 formed by extending a part of the second electrode plates 225 along one edge of the second electrode plate 225 in a direction opposite to a direction in which the first flag portion 210 extend, and a separator 25 interposed between the first electrode 21 and the second electrode 22, and the first electrode 21, the second electrode 22 and the separator 25 are wound around an imaginary winding axis A, and the first flag portion 220 may be bent in a direction away from the winding axis A.

Similarly, the second flag portion 220 may be bent in a direction away from the winding axis A.

That is, the first flag portion 210 and/or the second flag portion 220 may be bent in a direction away from the winding axis A or the central region 160h along a radial direction around the winding axis A.

Similarly, a battery cell 100 according to the present disclosure may include an electrode assembly 20 formed by winding a first electrode 21, a second electrode 22, and a separator 25 interposed between the first electrode 21 and the second electrode 22, a case 110 accommodating the electrode assembly 20, and a terminal portion 130 (see FIG. 1) protruding from the case 110, and the first electrode 21 may include a first electrode plate 215 including a first coating region 211 on which one of a positive electrode active material and a negative electrode active material is coated, and a first flag portion 210 formed by extending a part of the first electrode plate 225 along one edge of the first electrode plates 215 and bent in a direction away from a central region of the electrode assembly 20 and connected electrically to the terminal portion 130.

Further, referring to FIG. 3, the electrode assembly 20 may be wound around the central region 160h.

The first flag portion 210 according to the present disclosure may be bent in a direction away from the winding axis A. The first electrode 21 may include a plurality of first flag portions 210. The plurality of first flag portions 210 may be electrically connected to each other to have the same voltage. Therefore, the plurality of first flag portions 210 may be bent and arranged to overlap each other.

On the other hand, since the area of the plurality of first flag portions 210 is smaller than the area of the first electrode plate 215 belonging to the first coating region 211, in terms of current movement, the resistance of the first flag portion 210 may be relatively larger than that of the first electrode plates 215 belonging to first coating region 211. Since heat is generated when the resistance is large, the heat generation of the first flag portion 210 may be relatively large.

If the first flag part 210 is bent toward the winding axis A, the heat of the first flag parts 210 may not be quickly discharged to the outside. In order to prevent this, the first flag part 210 may be bent toward the outer part O.

Further, referring to FIGS. 4 and 5, the first flag portion 210 may include a plurality of first flags 210f, and at least a part of one of the plurality of first flanges 210f may overlap at least a part of the other first flag 210f closer to the winding axis A or the central region 160h than the one of the first flags 110f along the radial direction around the winding axis A or the central region 260h.

Thus, the plurality of first flags 210f may be connected to each other.

Further, referring to FIGS. 4 and 5, the first flag portion 210 includes a plurality of first flags 210f, and a length of one of the first flags 220f along a radial direction around the winding axis A or the central region 160h may be larger than a length of the other first flag 210f closer to the winding axis A or the central region 260h than the length of the one of the first flags 210f along the radial direction.

As an example, FIG. 4 illustrates the 1-1 flag 210a, the 1-2 flag 210b, and the 1-3 flag 210C in order along the center portion C among the plurality of first flags 210f. In other words, FIG. 4 shows a cross section cut along S=S' in FIG. 5.

Referring to FIGS. 4 and 5, the 1-1 flag 210a and the 1-2 flag 210b may at least partially overlap with each other, and the 1-2 flag 210b and the 1-3 flag 210c may at least partially overlapping with each other.

In an embodiment, the first flag portion may include a plurality of first flags, and at least a part of one first flag among the plurality of first flags overlaps with at least a part of other first flag that is closer to the winding axis than the one first flag along the radial direction.

In an embodiment, the first flag portion may include a plurality of first flags, and at least a part of one first flag among the plurality of first flags overlaps with at least a part of other first flag that is closer to the central region than the one first flag along the radial direction.

For example, the first flag portion 210 may include a plurality of first flags 210f, and at least a part of one of the plurality of first flanges 210f may overlap at least a part of the other first flag 210f closer to the winding axis A or the central region 160h than the one of the first flags 110f along the radial direction around the winding axis A or the central region 260h.

Further, referring to FIG. 4, the length L1 of the 1-1 flag 210a may be larger than the length L2 of the 1-2 flag 210b and the length L3 of the 1-3 flag 210c. In addition, the length L2 of the 1-2 flags 210b may be larger than the length L3 of the 1-3 flags 210c.

Similarly, generalizing this, the first flag portion 210 may include a plurality of first flags 210f, and a length of one of the first flags 220f along a radial direction around the winding axis A or the central region 160h may be larger than a length of the other first flag 210f closer to the winding axis A or the central region 260h than the length of the one of the first flags 210f along the radial direction.

Referring to FIGS. 2 and 5, the electrode assembly 20 may be wound in a roll shape with respect to the winding axis A or the central region 160h. Therefore, the cross section of the electrode assembly 20 cut at a preset height may be a spiral shape rolled toward the winding axis A or the central region 160h. Therefore, as long as the first electrode 21, the second electrode 22, and the separator 25 can be stacked on each other and wound into a roll, the cross section cut at the preset height may be spiral.

Therefore, in the present disclosure, the spiral direction is defined as a direction moving along the spiral toward the central axis, and the same meaning as the winding direction is used.

FIG. 5 only shows the first electrode 21 as a dotted concentric circle centered on the winding axis A for a schematic explanation. In addition, FIG. 5 illustrates only a part of the plurality of first flags 210f in order to illustrate that the plurality of first Flags 210f overlap.

FIG. 6 schematically illustrates an example of an electrode assembly according to the present disclosure.

FIG. 2 illustrates an example in which the electrode assembly 20 is wound, while FIG. 6 illustrates an example of the first electrode 21 before winding or stacking, or an example of the first electrode 21 after the wound electrode assembly 20 is unwound.

In an embodiment, the first flag portion 210 may be arranged to be spaced apart from one end on the outermost side of the first electrode 21 by a preset starting distance d1 along the winding direction, which is a direction toward the winding axis A along the first electrode 21.

In an embodiment, the first flag portion 210 may be arranged to be spaced apart from one end on the outermost side of the first electrode 21 by a preset starting distance along the winding direction, which is a direction toward the central region 160h along the first electrode 21.

For example, the first flag portion 210 may be spaced apart from each other by a preset starting distance d1 along the winding direction or the spiral direction. In an embodiment, the first flag portion 210 may be spaced apart from one end of the wound first electrode 21 on the outermost side by a preset starting distance d1 along a winding direction that is a direction toward the winding axis A along the first electrode 21.

During winding the first electrode plate 215, the first flag portion 210 is bent toward the outer portion O, so that the first flag portions 210 cannot be located on the outermost side of the first electrode 21. This is because the first flag portion 210 protrudes further along the radial direction than the electrode assembly 20 during winding.

Therefore, when the bending direction of the first flag portion 210 is selected, the first flag portions 210 may be spaced apart from the outermost side of the electrode assembly 20 by a preset distance along the radial direction. The preset distance may correspond to the starting distance d1 when winding the first electrode.

In addition, the first flag portion 210 may include a plurality of first flag groups 2101, 2102, and 2103 including a plurality of first flags 210f respectively, and the plurality of first flag groups 2101, 2102 and 2103 may be arranged to be spaced apart from each other by a preset spacing distance.

The spacing distance refers to the minimum distance among the spacing distances of adjacent first flag groups. That is, the distance between any one flag 210f of the plurality of first flags 210f in any one of the first flag groups, which is located closest to the other first flag group adjacent to the first flag group, and any one of the plurality of flags 210f of the other first flag groups in the first flag group may be the distance.

Referring to FIG. 6, the first flag portion 210 may include a plurality of first flag groups 2101, 2102, and 2103 including a plurality of first flags 210f, respectively. Although FIG. 6 shows three first flag groups 2101, 2102, 2103, this is only an example, and the number of the plurality of first flag groups 2102, 2102, 2103 may vary depending on the size of the battery cell or the size of the radius of the electrode assembly.

The distance between any two adjacent first flag groups among the plurality of first flag groups 2101, 2102, and 2103 may be a preset spacing distance.

For example, the 1-1 flag group 2101 and the 1-2 flag group 2102 may be arranged to be spaced apart by a preset distance.

Meanwhile, the spacing distance between the 1-2 flag group 2102 and the 1-3 flag group 2103 may be different from that between the 1-1 flag group 2101 and the 1-2 flag group 2102. This is because the radius of the first electrode 21 gradually decreases along the winding direction when the first electrode 21 is wound.

For example, a distance between adjacent first flag groups among the plurality of first flag groups 2101, 2102, and 2103 may increase toward the outer portion O.

That is, the distance between any pair of adjacent first flag groups among the plurality of first flag groups may increase as the positions of the pair of first flag groups approach the winding axis A along the winding direction.

In embodiment, the plurality of first flags 210f in one of the plurality of first flag groups 2101, 2102, and 2103 may be arranged to be spaced apart from each other by a preset spacing gap smaller than the spacing distance.

For example, the plurality of first flags 210f in any one of the plurality of first flag groups 2101, 2102, and 2103 may be arranged at a preset gap smaller than the spacing distance.

Referring to FIG. 6, it can be seen that a plurality of first flags 210f in any one of the first flag groups are densely arranged.

In an embodiment, the number of flags in one first flag group among the plurality of first flag groups 2101, 2102, and 2103 may be less than or equal to the number of flags in another first flag group among the plurality of first flag groups 2101, 2102, and 2103 that is closer to the winding axis A than the one first flag group along the winding direction.

In an embodiment, the number of flags in one first flag group among the plurality of first flag groups 2101, 2102, and 2103 may be less than or equal to the number of flags in another first flag group among the plurality of first flag groups 2101, 2102, and 2103 that is closer to the central region 160h than the one first flag group along the winding direction.

For example, referring to FIG. 3, the number of the plurality of first flags 210f in any one of the plurality of the first flag groups 2101, 2102, and 2103 may be less than or equal to the number of the first flag 210f of the other first flag group closer to the winding axis A or the central region 160h than that of any one of the first flag group along the winding direction.

This is because the radius of the first electrode 21 gradually decreases as it moves along the winding direction when the first electrode 21 is wound.

Meanwhile, the first flag portion 210 includes a plurality of first flags 210f, and each of the plurality of first flanges 210f may extend along a direction inclined with the winding axis A. This is to prevent the plurality of first flags 210f from being bent and overlapping upon winding, but to prevent a specific region from overlapping more. In addition, this is to more easily bend the plurality of first flags 210f.

For example, either flag 210f may be in the form of an inclined rectangle.

As another example, any one of the flags 210f may be in the form of a parallelogram.

Referring to FIGS. 3, 4 and 6, the length of any first flag 210f of any one of the plurality of first flag groups 2101, 2102, and 2103 along the winding direction may be larger than or equal to the length of any one of first flags 210f of the other first flag group closer to the winding axis A or central region 160h than any one of the first flag groups along the winding directions.

This is because the curvature increases as the winding axis A approaches, and thus the length of the first flag 210f needs to decrease along the winding direction.

In an embodiment, the width of a flag in one first flag group among the plurality of first flag groups may be larger than or equal to the width of a flag in another first flag group among the plurality of first flag groups that is closer to the winding axis than the one first flag group along the winding direction.

In an embodiment, the width of a flag in one first flag group among the plurality of first flag groups may be larger than or equal to the width of a flag in another first flag group among the plurality of first flag groups that is closer to the central region than the one first flag group along the winding direction.

For example, the width w1 of the flag 210f of any one of the plurality of first flags 210f in the 1-1 flag group 2101 along the winding direction may be larger than or equal to the width w2 of the flag 210 f of any one of a plurality of first flag 210f in a 1-2 flag group 2102.

Similarly, the length w2 of the flag 210f of any one of the plurality of first flags 210f in the first to second flag groups 2102 along the winding direction may be larger than or equal to the length w3 of the flag 210 f of any one of a plurality of first flag 210f in a plurality of first to third flag groups 2103.

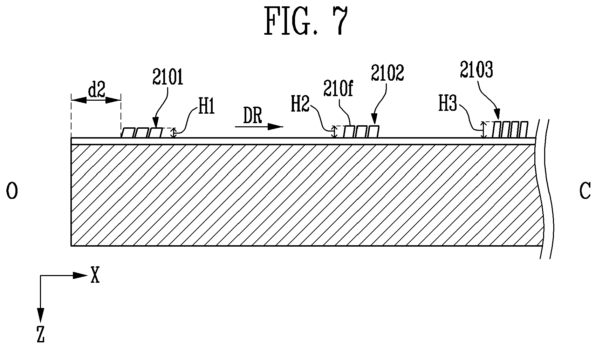

FIG. 7 schematically illustrates another example of an electrode assembly according to the present disclosure.

The same part as the part described in FIG. 6 is omitted from the description of FIG. 7. Accordingly, the description of FIG. 6 may also apply to FIG. 7, unless specifically stated otherwise.

Referring to FIG. 7, the first flag portion 210 may be spaced apart from each other by a preset starting distance d2 along the winding direction.

Further, the lengths of the plurality of first flag groups 2101, 2102, and 2103 extending from the first electrode plate 215 may increase toward the winding axis A or the central region 160h along the winding direction.

In an embodiment, the length of a flag in one first flag group among the plurality of first flag groups 2101, 2102, and 2103 along the extending direction of the first flag portion 210 may be less than or equal to the length of a flag in another first flag group among the plurality of first flag groups 2101, 2102, and 2103 that is closer to the winding axis A than the one first flag group along the winding direction.

In an embodiment, the length of a flag in one first flag group among the plurality of first flag groups 2101, 2102, and 2103 may be less than or equal to the length of a flag in another first flag group among the plurality of first flag groups 2101, 2102, and 2103 that is closer to the central region 160h than the one first flag group along the winding direction.

For example, the length of any of the first flags 210f in any one of the plurality of first flag groups 2101, 2102, and 2103 along the direction in which the first flag portion 210 extends may be less than or equal to the length of any other first flag 210f in the other first flag group closer to the winding axis A or the central region 160h than the first flag group in the winding direction.

For example, the length H2 of the flag 210f of any one of the plurality of first flags 210f in the 1-2 flag group 2102 along the winding axis A may be larger than or equal to the length H1 of the flag 210 f of any one of a plurality of first flag 210f in a 1-1 flag group 2101.

Similarly, the length H3 of the flag 210f of any one of the plurality of first flags 210f in the first to third flag groups 2103 along the winding axis A may be larger than or equal to the length H2 of the flag 210 f of any one of a plurality of first flag 210f in a plurality of first to second flag groups 2102.

The above description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being in the scope of the present disclosure.

## Claims

1. An electrode assembly comprising:
a first electrode including a first electrode plate including a first coating region on which one of a positive active material and a negative active material is coated and a first flag portion formed by extending a part of the first electrode plate along one edge of the first electrode plate;
a second electrode including a second electrode plate including a second coating region on which other of the positive electrode active material and the negative electrode active material is coated and a second flag portion formed by extending a part of the second electrode plate along one edge of the second electrode plate in a direction opposite to the direction in which the first flag portion extends; and
a separator interposed between the first electrode and the second electrode;
wherein the first electrode, the second electrode, and the separator are wound around an imaginary winding axis, and the first flag portion is bent in a direction away from the winding axis.

2. The electrode assembly according to claim 1, wherein the first flag portion is arranged to be spaced apart from one end on the outermost side of the first electrode by a preset starting distance along the winding direction, which is a direction toward the winding axis along the first electrode.

3. The electrode assembly according to claim 1 or 2, wherein the first flag portion includes a plurality of first flag groups each including a plurality of first flags, and the plurality of first flag groups are arranged to be spaced apart from each other by a preset spacing distance.

4. The electrode assembly according to anyone of claims 1 to 3, wherein the plurality of first flags in one of the plurality of first flag groups are arranged to be spaced apart from each other by a preset spacing gap smaller than the spacing distance.

5. The electrode assembly according to anyone of claims 1 to 4, wherein the length of a flag in one first flag group among the plurality of first flag groups along the extending direction of the first flag portion is less than or equal to the length of a flag in another first flag group among the plurality of first flag groups that is closer to the winding axis than the one first flag group along the winding direction, and/or
wherein the number of flags in one first flag group among the plurality of first flag groups is less than or equal to the number of flags in another first flag group among the plurality of first flag groups that is closer to the winding axis than the one first flag group along the winding direction, and/or
wherein the width of a flag in one first flag group among the plurality of first flag groups is larger than or equal to the width of a flag in another first flag group among the plurality of first flag groups that is closer to the winding axis than the one first flag group along the winding direction.

6. The electrode assembly according to anyone of claims 1 to 5, wherein the first flag portion includes a plurality of first flags, and at least a part of one first flag among the plurality of first flags overlaps with at least a part of other first flag that is closer to the winding axis than the one first flag along the radial direction.

7. The electrode assembly according to anyone of claims 1 to 6, wherein the second flag portion is bent in a direction away from the winding axis.

8. The electrode assembly according to anyone of claims 1 to 7, wherein the first flag portion includes a plurality of first flags, and each of the plurality of first flags extends along a direction inclined with the winding axis.

9. A battery cell comprising:
an electrode assembly formed by winding, preferably by winding around a central region, a first electrode, a second electrode, and a separator interposed between the first electrode and the second electrode;
a case accommodating the electrode assembly; and
a terminal portion protruding from the case;
wherein the first electrode includes a first electrode plate including a first coating region on which one of a positive electrode active material and a negative electrode active material is coated, and a first flag portion formed by extending a part of the first electrode plate along one edge of the first electrode plate and being bent in a direction away from the central region of the electrode assembly and connected electrically to the terminal portion.

10. The battery cell according to claim 9, wherein the first flag portion is arranged to be spaced apart from one end on the outermost side of the first electrode by a preset starting distance along the winding direction, which is a direction toward the central region along the first electrode.

11. The battery cell according to claim 9 or 10, wherein the first flag portion includes a plurality of first flag groups each including a plurality of first flags, and the plurality of first flag groups are arranged to be spaced apart from each other by a preset spacing distance.

12. The battery cell according to anyone of claims 9 to 11, wherein the plurality of first flags in one of the plurality of first flag groups are arranged to be spaced apart from each other by a preset spacing gap smaller than the spacing distance.

13. The battery cell according to anyone of claims 9 to 12, wherein the length of a flag in one first flag group among the plurality of first flag groups is less than or equal to the length of a flag in another first flag group among the plurality of first flag groups that is closer to the central region than the one first flag group along the winding direction, and/or
wherein the number of flags in one first flag group among the plurality of first flag groups is less than or equal to the number of flags in another first flag group among the plurality of first flag groups that is closer to the central region than the one first flag group along the winding direction, and/or
wherein the width of a flag in one first flag group among the plurality of first flag groups is larger than or equal to the width of a flag in another first flag group among the plurality of first flag groups that is closer to the central region than the one first flag group along the winding direction.

14. The battery cell according to anyone of claims 9 to 13, wherein the first flag portion includes a plurality of first flags, and at least a part of one first flag among the plurality of first flags overlaps with at least a part of other first flag that is closer to the central region than the one first flag along the radial direction.

15. The battery cell according to anyone of claims 9 to 14, wherein the second electrode includes a second electrode plate including a second coating region on which the other of a positive electrode active material and a negative electrode active material is coated, and a second flag portion formed by extending a part of the second electrode plate along one edge of the second electrode plate in a direction opposite to the direction in which the first flag portion extends and is bent in a direction away from the central region of the electrode assembly.
